Europäisches Patentamt

European Patent Office

Office européen des brevets

(11) Veröffentlichungsnummer: **0 425 986 A1**

## EUROPÄISCHE PATENTANMELDUNG

(21) Anmeldenummer: 90120322.4

(22) Anmeldetag: 23.10.90

(51) Int. Cl.5: **B60C 27/08**

(30) Priorität: 30.10.89 DE 8912836 U

(43) Veröffentlichungstag der Anmeldung:
08.05.91 Patentblatt 91/19

(84) Benannte Vertragsstaaten:
AT CH DE IT LI

(71) Anmelder: **Steirische Kettenfabriken Pengg-Walenta KG**
**Theodor-Körner Strasse 59**
**A-8021 Graz(AT)**

(72) Erfinder: **Walenta, Walter**
**Millöckergasse 22**
**A-8010 Graz(AT)**

(74) Vertreter: **Fehners, Klaus Friedrich, Dipl.-Ing.**
**Dipl.-Wirtsch.-Ing. et al**
**Patentanwälte Dipl.-Ing. A. Wedde Dipl.-Ing.**
**K. Empl Dipl.-Ing., Dipl.-Wirtsch.-Ing. K.**
**Fehners Schumannstrasse 2**
**W-8000 München 80(DE)**

(54) Steg- und Greifglied für Reifenschutz- und/oder Geländeketten sowie eine unter Verwendung solcher Glieder hergestellte Kette.

(57) Steg- und Greifglied (1) für Reifenschutz- und/oder Geländeketten sowie unter Verwendung solcher Glieder hergestellte Kette, wobei das Steg- und Greifglied im wesentlichen zwei Steitenflächen (3, 4,) eine der Reifenoberfläche zugewandte Unterseite (7) und eine dem Fahrgrund zugewandte Oberseite (2) sowie zwei das Glied in seiner Längsausdehnung abschließende Stirnseiten (5, 6) und mindestens eine Aufnahmeöffnung (9) für den Anschluß von Verbindungsgliedern (10) aufweist und wobei das Steg- und Greifglied asymmetrisch ausgebildet ist, insbesondere eine der beiden Seitenflächen (3) im wesentlichen plan und die andere Seitenfläche (4) strukturiert ausgebildet ist.

Fig.3

Fig.5

EP 0 425 986 A1

## STEG- UND GREIFGLIED FÜR REIFENSCHUTZ- UND/ODER GELÄNDEKETTEN SOWIE EINE UNTER VERWENDUNG SOLCHER GLIEDER HERGESTELLTE KETTE

Die Erfindung betrifft ein Steg- und Greifglied für Reifenschutz- und/oder Geländeketten nach dem Oberbegriff des Hauptanspruches sowie eine unter Verwendung solcher Glieder hergestellte Kette.

Bei solchen Ketten ist das Laufkettennetz beispielsweise aus Vier-oder Sechsecken aufgebaut, welche von jeweils vier bzw. sechs vertikal angeordneten und als ovale Kettenglieder ausgebildeten Stegglieder gebildet und wiederum von liegend angeordneten Verbindungsringen gehalten werden.

Die Stegglieder sollen dabei den Reifen vor Beschädigung, beispielsweise durch spitzes Gestein, schützen und andererseits auch eine gute Greifwirkung zeigen.

Da solche Gleitschutzketten zum Schutz des Reifens verhältnismäßig engmaschig ausgebildet sind, treten insbesondere beim Fahren von schnelllaufenden Erdbewegungsmaschinen hohe Fliehkräfte auf, wodurch die Reifenkette auch wegen ihres hohen Gewichtes und der auftretenden hohen Fliehkräfte und der großen Anzahl von Knotenpunkten einem großen inneren Verschleiß unterliegt.

Es ist deshalb bekannt, die Gebrauchsdauer solcher Reifenschutz- und/oder Geländeketten dadurch zu erhöhen, daß die Stegglieder doppelt angeordnet werden, hierdurch wird vorteilhaft erreicht, daß sie sich durch die Relativbewegung zueinander selbst gut reinigen und dadurch die Greifwirkung bedeutend erhöht wird.

Andererseits ist es auch bekannt, die einzeln angeordneten Stegglieder als Greifglieder auszubilden wie sie beispielsweise aus dem DE-GM 87 08 697.2 bekannt sind.

Wenn bei solchen Greifgliedern die stollenförmigen Erhebungen weit gehend abgefahren sind, öffnen sich die in ihrem jeweiligen Bereich seitlich angeordneten Bohrungen und es bilden sich somit neue stollenförmige Erhebungen. Obwohl durch die Anordnung von Bohrungen Gliedvolumen verlorengeht, läßt sich bei solchen bekannten Greifgliedern ohne Erhöhung des Gliedvolumens eine Steigerung der Glied-Lebensdauer und damit auch der Ketten-Lebensdauer erreichen, da durch die seitlichen Bohrungen die gehärtete Oberfläche im Verschleißbereich des Greifgliedes wesentlich erhöht wird.

Es ist auch bekannt, zur Erhöhung der Lebensdauer eines solchen Greifgliedes dessen Volumen zu erhöhen, wobei sich jedoch nachteilig auswirkt, daß das Verhältnis des gehärteten Anteiles von Oberfläche bzw. Gliedvolumen zum Gesamtvolumen ungünstiger wird.

Aufgabe der Erfindung ist es deshalb, Stegglieder für eine Reifenschutz- und/oder Geländekette zu schaffen, welche einerseits die Vorteile von geschmiedeten Steg-Greifgliedern und andererseits von doppelt angeordneten, oval ausgebildeten Kettengliedern, insbesondere dabei auch ein sehr günstiges Verhältnis von gehärtetem zu ungehärtetem Volumen, aufweisen.

Diese Aufgabe wird bei einem gattungsgemäßen Stegglied durch die kennzeichnenden Merkmale des Hauptanspruches gelöst. Die asymmetrische Ausbildung der Seitenflächen erlaubt die Zwillingsanordnung mit einem weiteren so ausgebildeten Steg- und Greifglied an zwei Verbindungsgliedern mit dem Vorteil, daß den jeweils nach außen gerichteten Seitenflächen eine den Gebrauchszweck fördernde Ausbildung gegeben werden kann.

Das Steg- und Greifglied bildet mit den Merkmalen des Anspruches 2 den weiteren Vorteil, daß es wegen der planen Ausbildung einer seiner Seitenflächen unmittelbar benachbart neben der planen Seitenfläche eines zweiten so ausgebildeten Steg- und Greifgliedes raumsparend angeordnet werden kann. Weitere vorteilhafte Ausführungen des erfindungsgemäßen Gegenstandes sind den Unteransprüchen zu entnehmen.

Aufgrund der in den Ansprüchen beschriebenen Merkmale wird insbesondere die Lebensdauer solcher damit ausgestatteten Gleitschutzketten gegenüber derjenigen bei bekannten Ketten wesentlich erhöht. So ist es möglich, das Verschleißvolumen solcher Ketten aufgrund der durch die Anordnung von zwei solcher asymmetrisch ausgebildeten Steg- und Greifglieder vergrößerte gehärtete Oberfläche zu erhöhen und gleichzeitig die Beweglichkeit und Anpassungsfähigkeit der Gleitschutzkette insgesamt nicht zu veringern. Hierbei können sich die Einzelglieder der Gleitschutzkette durch deren vergrößerte Beweglichkeit besser selbst reinigen und schließlich bleibt eine solche Gleitschutzkette auch dann noch einsatzbereit, wenn eines der beiden parallel zueinander angeordneten Steg- und Greifglieder brechen sollte.

Der Erfindungsgegenstand wird nachstehend anhand der in den Zeichnungen dargestellten Figuren erläutert.

Es zeigen

Fig. 1 eine Draufsicht auf eine Reifenschutz- und/oder Geländekette mit doppelt angeordneten Steg- und Greifgliedern,

Fig. 2 eine Draufsicht wie in Fig. 1, jedoch mit Steg- und Greifgliedern, deren Erhöhungen bzw. Vertiefungen auf den Oberseiten zueinander versetzt angeordnet sind,

Fig. 3 eine Ansicht der strukturierten Seite eines Steg- und Greifgliedes einer ersten Ausführungsform,

Fig. 4 eine Draufsicht auf ein Steg- und Greifglied gemäß Fig. 3,

Fig. 5 einen Schnitt gemäß Linie V-V in Fig. 3,

Fig. 6 eine Ansicht auf die strukturierte Seite eines Steg- und Greifgliedes mit sägezahnförmig ausgebildeten Erhöhungen und Vertiefungen einschließlich der strichpunktlinierten Andeutung eines zweiten, ebenfalls mit sägezahnförmigen Erhöhungen und Vertiefungen an seiner Oberseite ausge bildeten zweiten Steg- und Greifgliedes,

Fig. 7 eine Draufsicht auf die Anordnung gemäß Fig. 6,

Fig. 8 eine Ansicht auf die strukturierte Seite einer weiteren Ausführungsform eines Steg-und Greifgliedes,

Fig. 9 eine Draufsicht auf zwei nebeneinander angeordnete Steg- und Greifglieder gemäß Fig. 8,

Fig. 10 eine Seitenansicht auf die strukturierte Seitenfläche eines Steg- und Greifgliedes mit einer weiteren Ausführungsform der Erhöhungen und Vertiefungen auf der Oberseite sowie mit strichliniert angedeuteten weiteren Vertiefungen im Bereich der Erhöhungen auf der planen Seitenfläche sowie mit dort vorgesehenen noppenförmigen Vorsprüngen,

Fig. 11 eine Draufsicht auf ein Steg- und Greifglied gemäß Fig. 10, und

Fig. 12 einen Schnitt gemäß XII-XII in Fig. 10.

Die in den Figuren dargestellten Steg- und Greifglieder 1, 1$'$, 1$''$, 1$'''$ weisen trotz ihrer unterschiedlichen Ausgestaltung insbesondere bezüglich der den Fahrgrund berührenden Oberseiten 2, 2$'$, 2$''$, 2$'''$ jeweils eine plane Seitenfläche 3, 3$'$, 3$''$, 3$'''$ und eine strukturierte zweite Seitenfläche 4, 4$'$, 4$''$, 4$'''$ auf, welche jeweils durch die Stirnflächen 5 und 6 begrenzt sind. Mit der Unterseite 7 liegen diese Steg- und Greifglieder auf der Reifenoberfläche auf.

Weiter weisen diese Glieder in den Ausführungsbeispielen jeweils zwei Aufnahmeöffnungen 8 und 9 für die einzelnen Glieder miteinander verbindende Verbindungsglieder, vorzugsweise Verbindungsringe 10, auf.

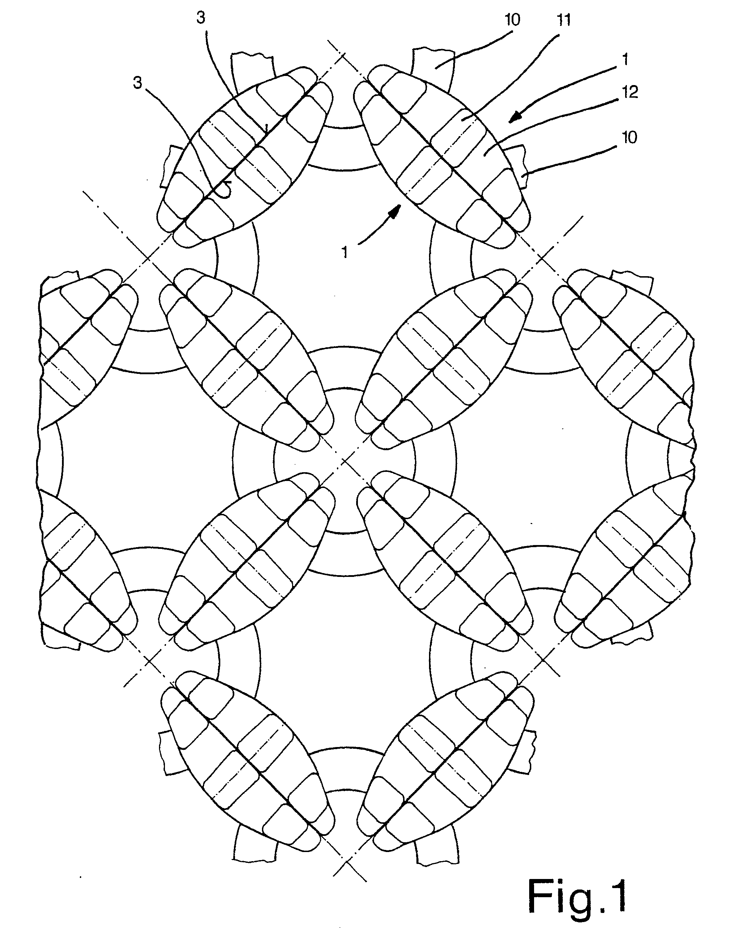

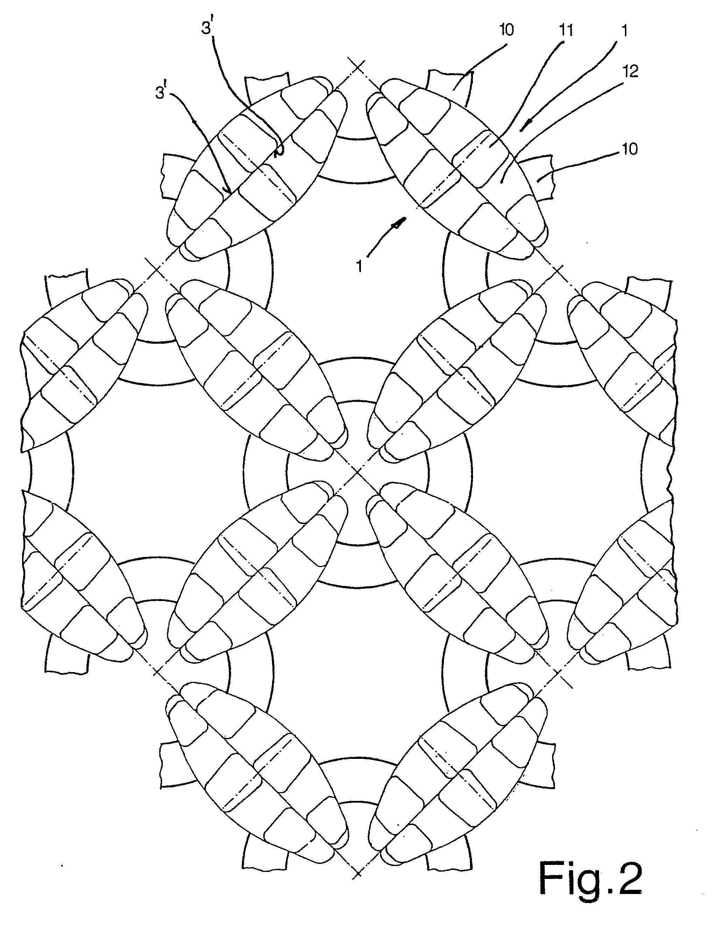

In den Fig. 1 und 2 sind jeweils Ausschnitte von Draufsichten auf mit solchen Steg- und Greifgliedern 1 bzw. 1$'$ und mit Verbindungsringen 10 ausgestattete Gleitschutz- und/oder Geländeketten dargestellt.

Wie insbesondere diesen Figuren zu entnehmen ist, sind jeweils zwei Steg- und Greifglieder 1 bzw. 1$'$ mit ihren planen Seitenflächen 3 bzw. 3$'$ aneinanderliegend an den benachbarten Verbindungsringen 10 befestigt.

Die Steg- und Greifglieder 1 bzw. 1$'$ unterscheiden sich durch die unterschiedliche Ausbildung ihrer Oberseiten 2 bzw. 2$'$, wonach die Erhöhungen 11 bzw. 11$'$ bzw. Vertiefungen 12 bzw. 12$'$ gleichgerichtet, wie in Fig. 1 gezeigt, oder gegeneinander versetzt, wie in Fig. 2 gezeigt, ausgebildet sind.

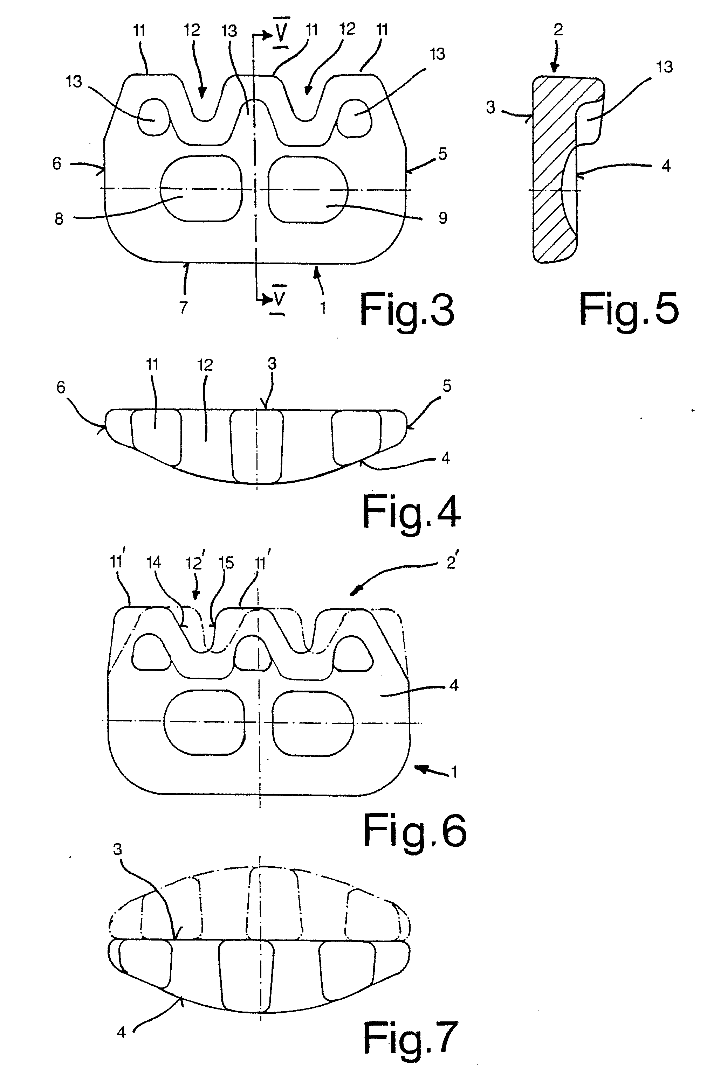

Das Steg- und Greifglied nach der Fig. 1 ist in den Fig. 3. bis 5 detailliert dargestellt. Insbesondere Fig. 3 und 5 zeigen, daß die strukturierte Seitenfläche 4 in den Bereichen der drei Erhöhungen 11 jeweils muldenförmige Ausnehmungen 13 aufweisen, wodurch die Dicke des Steg- und Greifgliedes 1 in diesem Bereich trotz der verhältnismäßig breiten Oberseite 2 verringert ist und womit erreicht wird, daß das einsatzgehärtete Volumen gegenüber dem Gesamtvolumen des Steg- und Greifgliedes vergrößert ist. Hierdurch erhöht sich letztlich die Verschleißfestigkeit des Gliedes.

In den Fig. 6 und 7 ist das Steg- und Greifglied 1$'$ dargestellt, bei welchem die Erhöhungen 11$'$ und Vertiefungen 12$'$ sägezahnförmig ausgebildet sind, d. h., die sich jeweils in einer Vertiefung gegenüberliegenden Flanken 14$'$ bzw. 15$'$ sind unterschiedlich steil ausgebildet.

Durch die Anordnung solcher Steg- und Greifglieder 1$'$, wie in Fig. 2 dargestellt, wird die Griffigkeit der Gleitschutzkette wesentlich erhöht.

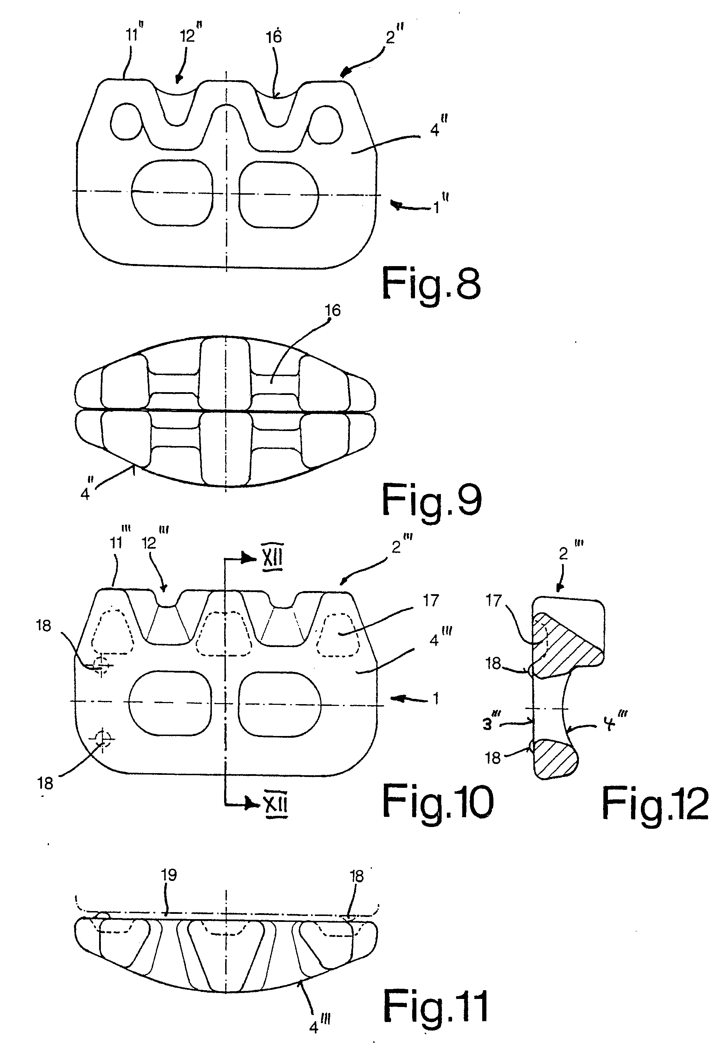

Fig. 8 und 9 zeigen Steg- und Greifglieder 1$''$, bei welchen die Erhöhungen 11$''$ durch in den Vertiefungen 12$''$ an der Oberseite 2$''$ längsverlaufende Stege 16 verbunden sind, wobei diese Stege vorteilhaft weniger hoch als die Erhöhung 11$''$ ausgebildet sind.

Durch diese Stege 16 wird die Quergreifwirkung der Gleitschutzkette erhöht.

Schließlich ist in den Fig. 10 bis 12 ein Steg- und Greifglied 1$'''$ abgebildet, welches noch eine weitere Ausführungsform der Erhöhungen 11$'''$ und der Vertiefungen 12$'''$ an der Oberseite 2$'''$ zeigen. Insbesondere der in Fig. 12 gezeigte Schnitt gem. Linie XII-XII in Fig. 10 veranschaulicht die besondere Ausbildung des Bereiches in den Vertiefungen 12$'''$.

Bei den in diesen Figuren gezeigten Ausführungsbeispielen eines Steg-und Greifgliedes sind auch auf der planen Seitenfläche 3$'''$ muldenförmige Vertiefungen 17 in den Bereichen der Erhöhungen 11$'''$ vorgesehen durch welche, wie schon im ersten Ausführungsbeispiel anhand der Fig. 3 und 5 beschrieben, das einsatzgehärtete Volumen des Gliedes erhöht wird.

Solche muldenförmige Vertiefungen 17 können selbstverständlich auch an den planen Seitenflächen 3, 3$'$ und 3$''$ der vorbeschriebenen Ausführungsbeispiele angeordnet sein.

Gleiches gilt auch für die in den Fig. 10 bis 12 gezeigten noppenförmigen Erhebungen 18, welche sich zusammen mit einem zweiten, entsprechend ausgebildeten Steg- und Greifglied, wie in Fig. 11 angedeutet, dahingehend ergänzen, daß zwischen den Gliedern ein Zwischenraum 1″ frei bleibt, der es ermöglicht, daß bei der Einsatzhärtung der aus den Gliedern und den Verbindungsringen zusammengesetzten Gleitschutzkette die Kühlflüssigkeit zwischen die mit Abstand aneinanderliegenden Glieder eindringen kann und dadurch die Seitenfläche 3″ mit den muldenförmigen Vertiefungen 17 wie die übrigen Seiten und Flächen des Gliedes gehärtet werden können.

**Ansprüche**

1.) Steg- und Greifglied (1, 1′, 1″, 1‴) für Reifenschutz-und/oder Geländeketten mit im wesentlichen zwei Seitenflächen (3, 3′, 3″, 3‴, 4, 4′, 4″, 4‴), einer der Reifenoberfläche zugewandten Unterseite (7) und einer dem Fahrgrund zugewandten Oberseite (2, 2′, 2″, 2‴) sowie zwei das Glied in seiner Längsausdehnung abschließenden Stirnseiten (5, 6) und mit mindestens einer Aufnahmeöffnung (9) für den Anschluß von Verbindungsgliedern (10), **dadurch gekennzeichnet,** daß das Steg- und Greifglied (1, 1′, 1″, 1‴) bezüglich seiner Seitenflächen (3, 3′, 3″, 3‴, 4, 4′, 4″, 4‴) asymmetrisch ausgebildet ist.

2.) Steg- und Greifglied nach Anspruch 1, **dadurch gekennzeichnet,** daß eine der beiden Seitenflächen (3, 3′, 3″, 3‴) im wesentlichen plan ausgebildet ist.

3.) Steg- und Greifglied nach Anspruch 2, **dadurch gekennzeichnet,** daß die plane Seitenfläche (3″) mehrere partielle Erhebungen (18) aufweist.

4.) Steg- und Greifglied nach Anspruch 3, **dadurch gekennzeichnet,** daß die Erhebungen (18) noppenförmig ausgebildet sind.

5.) Steg- und Greifglied nach Anspruch 3, **dadurch gekennzeichnet,** daß die Erhebungen rippenförmig ausgebildet sind.

6.) Steg- und Greifglied nach Anspruch 4 und 5, **dadurch gekennzeichnet,** daß die Erhebungen asymmetrisch auf der Seitenfläche (3″) angeordnet sind.

7.) Steg- und Greifglied nach Anspruch 1, **dadurch gekennzeichnet,** daß die andere Seitenfläche (4, 4′, 4″, 4‴) strukturiert ausgebildet ist.

8.) Steg- und Greifglied nach Anspruch 1, **dadurch gekennzeichnet,** daß die Oberseite (2, 2′, 2″, 2‴) gegenüber der Unterseite (7) breiter ausgebildet ist.

9.) Steg- und Greifglied nach Anspruch 1, **dadurch gekennzeichnet,** daß die Oberseite (2, 2′, 2″, 2‴) Vertiefungen (12, 12′, 12″, 12‴) bzw. Erhöhungen (11, 11′, 11″, 11‴) aufweist bzw. sägezahnförmig ausgebildet ist.

10.) Steg- und Greifglied nach Anspruch 9, **dadurch gekennzeichnet,** daß die Erhöhungen und/oder Vertiefungen unsymmetrisch über die Länge der Oberseite verteilt sind.

11.) Steg- und Greifglied nach Anspruch 9 , **dadurch gekennzeichnet,** daß die strukturierte Seitenfläche (4, 4′, 4″, 4‴) in den Bereichen der Erhöhungen (11, 11′, 11″, 11‴) muldenförmige Vertiefungen aufweist.

12.) Steg- und Greifglied nach Anspruch 9, **dadurch gekennzeichnet,** daß die plane Seitenfläche (3, 3′, 3″, 3‴) im Bereich der Erhöhungen (11, 11′, 11″, 11‴) muldenförmige Vertiefungen aufweist.

13.) Steg- und Greifglied nach Anspruch 9, **dadurch gekennzeichnet,** daß in den Vertiefungen (12, 12′, 12″, 12‴) in Längsrichtung der Oberseite verlaufende Stege (16) zwischen den Erhöhungen (11, 11′, 11″, 11‴) angeordnet sind.

14.) Steg- und Greifglied nach einem der vorhergehenden Ansprüche, **dadurch gekennzeichnet,** daß es gesenkgeschmiedet ausgebildet ist.

15.) Steg- und Greifglied nach einem der vorhergehenden Ansprüche, **dadurch gekennzeichnet,** daß es vergütet oder einsatzgehärtet ist.

16.) Reifenschutz- und/oder Geländekette mit Steg- und Greifgliedern nach den Ansprüchen 1 bis 15 und mit Verbindungsgliedern, vorzugsweise Verbindungsringen, wobei die Verbindungsglieder liegend, also im wesentlichen parallel zur Reifenoberfläche und die Steg-und Greifglieder stehend, also senkrecht dazu angeordnet sind, **dadurch gekennzeichnet,** daß jeweils zwei Steg- und Greifglieder (1, 1′, 1″, 1‴) mit ihren planen Seitenflächen (3, 3′, 3″, 3‴) unmittelbar benachbart zueinander angeordnet und an den Verbindungsgliedern befestigt sind.

17.) Reifenschutz- und/oder Geländekette nach Anspruch 16, **dadurch gekennzeichnet,** daß die paarweise vorgesehenen Steg- und Greifglieder (1, 1′, 1″, 1‴) mit einem Abstand (19) zueinander angeordnet sind.

Fig.1

Fig.2

Fig.3

Fig.5

Fig.4

Fig.6

Fig.7

Fig.8

Fig.9

Fig.10

Fig.12

Fig.11

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y,A | US-A-4 408 645   (DOHMEIER) <br> * Spalte 3, Zeile 55 - Spalte 4, Zeile 8; Figuren 1, 3, 6a-6d * <br><br> – – – | 1-6,7-9, 11,13,15, 14,16 | B 60 C <br> 27/08 |
| Y,D,A,D | DE-U-8 708 697   (STEIRISCHE KETTENFABRIKEN PENG-WALENTA KG) <br> * Seite 3, Zeile 8 - Seite 4, Zeile 4; Anspruch 6; Figuren 1-4 * <br> – – – | 7-9,11, 13,10,14, 15 | |
| Y | EP-A-0 302 815   (RUD KETTENFABRIK RIEGER & DIETZ GMBH U. CO) <br> * Spalte 3, Zeilen 2 - 6; Anspruch 17; Figur 4 * <br> – – – | 15 | |
| A | DE-U-8 903 692   (EISEN- UND DRAHTWERK ERLAU AG) <br> * Figuren 5, 6 * <br><br> – – – – – | 10 | |

### RECHERCHIERTE SACHGEBIETE (Int. Cl.5)

B 60 C

Der vorliegende Recherchenbericht wurde für alle Patentansprüche erstellt

| Recherchenort | Abschlußdatum der Recherche | Prüfer |
|---|---|---|
| Den Haag | 24 Januar 91 | MYON G.J-P. |